# EUROPÄISCHE PATENTSCHRIFT

(11) **EP 0 883 538 B1**
(45) Veröffentlichungstag und Bekanntmachung des Hinweises auf die Patenterteilung: **19.09.2001**
(21) Anmeldenummer: 96946186.2
(22) Anmeldetag: 11.12.1996
(51) Int. Cl.: B60T 13/68, B60T 13/24

(54) **ANHÄNGERSTEUERVENTIL FÜR EINE DRUCKLUFTBREMSANLAGE FÜR KRAFTFAHRZEUGE**
TRAILER CONTROL VALVE FOR A MOTOR-VEHICLE COMPRESSED-AIR BRAKE SYSTEM
VALVE DE COMMANDE DE REMORQUE POUR SYSTEME DE FREINAGE A AIR COMPRIME DE VEHICULE A MOTEUR

(30) Priorität: 09.03.1996 DE 19609222
(43) Veröffentlichungstag der Anmeldung: 16.12.1998
(73) Patentinhaber: KNORR-BREMSE Systeme für Nutzfahrzeuge GmbH, 80809 München (DE)
(72) Erfinder: KAISERS, Olaf, D-70329 Stuttgart (DE); SCHAFFERT, Eberhard, D-71229 Leonberg (DE)
(86) Internationale Anmeldenummer: DE9602391
(87) Internationale Veröffentlichungsnummer: WO9732767

(56) Entgegenhaltungen:
- EP-A- 0 243 618
- EP-A- 0 479 044
- EP-A- 0 547 407

## Beschreibung

### Stand der Technik

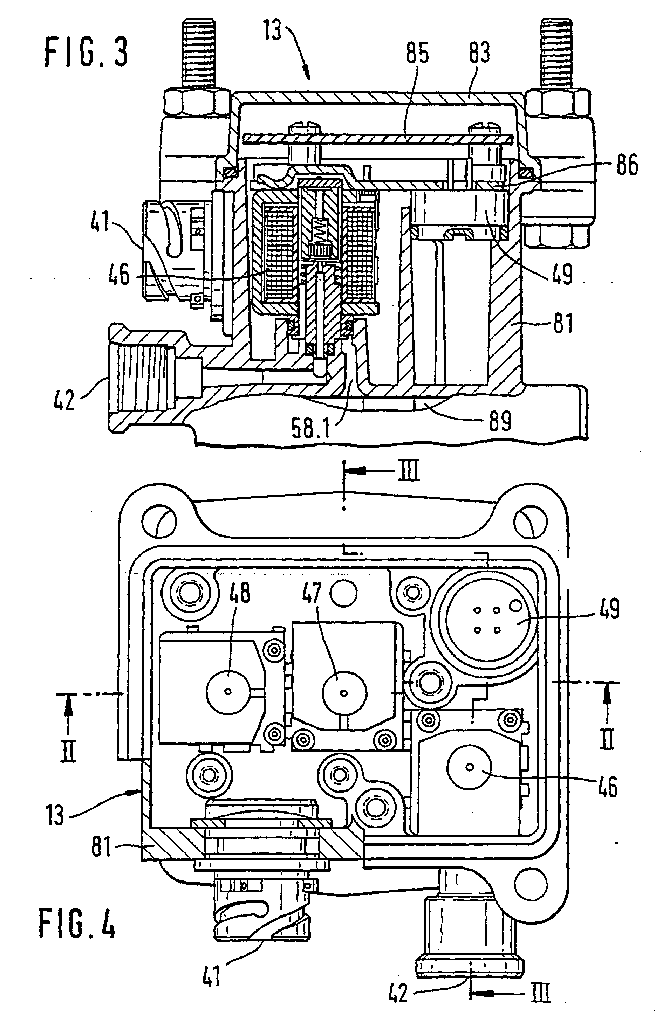

Aus EP 0 110 119 Al, Figur 4 sowie aus EP 0 547 407 Al ist ein Relaisventil bekannt, dessen Steuerkammer mit aus zwei Steuerkreisen einer elektronisch gesteuerten Druckluftbremsanlage für Kraftfahrzeuge herangeführten Steuerdrücken ansteuerbar ist. An das Relaisventil ist wenigstens ein Bremszylinder des Kraftfahrzeugs angeschlossen. Die beiden Steuerdrücke sind bei einer Betätigung eines Bremswertgebers erzeugbar, und zwar ein Steuerdruck in einem elektrischen Teil und ein Steuerdruck in einem pneumatischen Teil des Bremswertgebers. Jeder Steuerdruck kann an die Stelle des anderen treten. Da jedoch der im elektrischen Teil des Bremswertgebers erzeugte Steuerdruck der führende sein soll, wird bei Vorliegen dieses Steuerdrucks der im pneumatischen Teil des Bremswertgebers erzeugte andere Steuerdruck mittels eines der Steuerkammer des Relaisventils vorgeordneten Umschaltventils zurückgehalten. Fällt jedoch der im elektrischen Teil des Bremswertgebers erzeugte Steuerdruck aus, so wird durch Umschalten des Ventils der andere Steuerdruck in der Steuerkammer des Relaisventils wirksam. Die Druckluftbremsanlage behält daher bei einer derartigen Störung ihre Funktionsfähigkeit.

Herkömmliche Druckluftbremsanlagen von Kraftfahrzeugen besitzen zwei voneinander getrennte Steuerkreise einer Betriebsbremsanlage, von denen ein Steuerkreis der Vorderachse und ein Steuerkreis der Hinterachse des Fahrzeugs zugeordnet ist. Zugfahrzeuge von Fahrzeugkombinationen sind darüber hinaus mit einem Anhängersteuerventil zur Betätigung einer Anhängerbremsanlage ausgestattet. Das ein Relaisventil bildende Anhängersteuerventil weist zwei Steuerkammern auf, an die jeweils ein Steuerkreis der Betriebsbremsanlage im Sinne einer Parallel-Redundanz angeschlossen ist. Eine weitere Steuerkammer des Anhängersteuerventils ist an eine Feststellbremsanlage des Zugfahrzeugs angeschlossen. Die Anhängerbremsanlage ist durch Druckeinsteuerung in die Steuerkammern des Anhängersteuerventils betätigbar, welche mit den Steuerkreisen der Betriebsbremsanlage verbunden sind. Dabei ist der der Hinterachse des Zugfahrzeugs zugeordnete Steuerkreis der führende. Außerdem ist das Anhängersteuerventil durch Druckabfall in der der Feststellbremsanlage zugeordneten Steuerkammer im Bremssinn umschaltbar.

Elektronisch gesteuerte Druckluftbremsanlagen von Zugfahrzeugen sind mit einem Anhängersteuermodul gemäß der für den Patentanspruch 1 gattungsbildenden Art nach DE 42 26 697 C1 ausgestattet, welches ein Anhängersteuerventil mit zwei den Steuerkreisen der Betriebsbremsanlage zugeordnete Steuerkammern hat. Da der führende Steuerkreis ein elektrisch arbeitender ist, sind im Oberteil des Ventilgehäuses Magnetventile vorgesehen, mit denen aus einem Druckluftvorrat entnommene Steuerluft für eine Betätigung einer Anhängerbremsanlage in die zugeordnete Steuerkammer einsteuerbar ist. Bei Ausfall des elektrischen Steuerkreises ist der zweite, pneumatische Steuerkreis für die Einsteuerung von Steuerluft in die zweite Steuerkammer des Anhängersteuerventils wirksam. Während also der elektrische Steuerkreis bei der Ansteuerung der Anhängerbremsanlage der mit hoher Funktionssicherheit allein wirkende ist, wird im Anhängersteuerventil eine zweite Steuerkammer vorgehalten, deren Inanspruchnahme nur in einem wenig wahrscheinlichen Störfall benötigt wird. Darüber hinaus sind im bekannten Anhängersteuerventil Maßnahmen getroffen, einen in der zweiten Steuerkammer angeordneten Steuerkolben beweglich zu halten, damit er im Störfall des elektrischen Steuerkreises funktionsfähig ist. Insgesamt gesehen sind für einen wenig wahrscheinlichen Defekt des elektrischen Steuerkreises konstruktiv relativ aufwendige Maßnahmen getroffen, um die Funktion des Anhängersteuerventils zu erhalten.

### Vorteile der Erfindung

Das erfindungsgemäße Anhängersteuermodul mit den kennzeichnenden Merkmalen des Patentanspruchs 1 hat demgegenüber den Vorteil, daß der konstruktive Aufwand durch Wegfall der zweiten Steuerkammer mit Steuerkolben erheblich gemindert wird. Dennoch ist aber sichergestellt, daß in jedem Fall ein Steuerkolben zur Verfügung steht, unabhängig davon, von welchem Steuerkreis ein Steuerdruck zur Anwendung kommt. Außerdem sind die in entsprechender Schaltungsanordnung eingesetzten Wegeventile einfachster Ausführung ausreichend, um im elektrischen Steuerkreis einen Steuerdruck unter Inanspruchnahme des der Feststellbremsanlage zugeordneten Druckluftvorrats zu erzeugen und beispielsweise lastabhängig oder bremsschlupfabhängig zu modulieren.

Durch die in den Unteransprüchen aufgeführten Maßnahmen sind vorteilhafte Weiterbildungen und Verbesserungen des im Patentanspruch 1 angegebenen Anhängersteuermoduls möglich.

Mit der im Anspruch 2 offenbarten Weiterbildung der Erfindung ist mit einfachen Mitteln erreicht, daß bei Ausfall des elektrischen Steuerkreises der Steuerdruck des pneumatischen Steuerkreises auf den einen Steuerkolben zur Wirkung kommen kann.

Schließlich ist mit der im Anspruch 3 offenbarten Maßnahme eine Baueinheit geschaffen, in der die zur unmittelbaren Ansteuerung des einen Steuerkolbens erforderlichen elektrischen und mechanischen Mittel vereinigt sind.

### Zeichnung

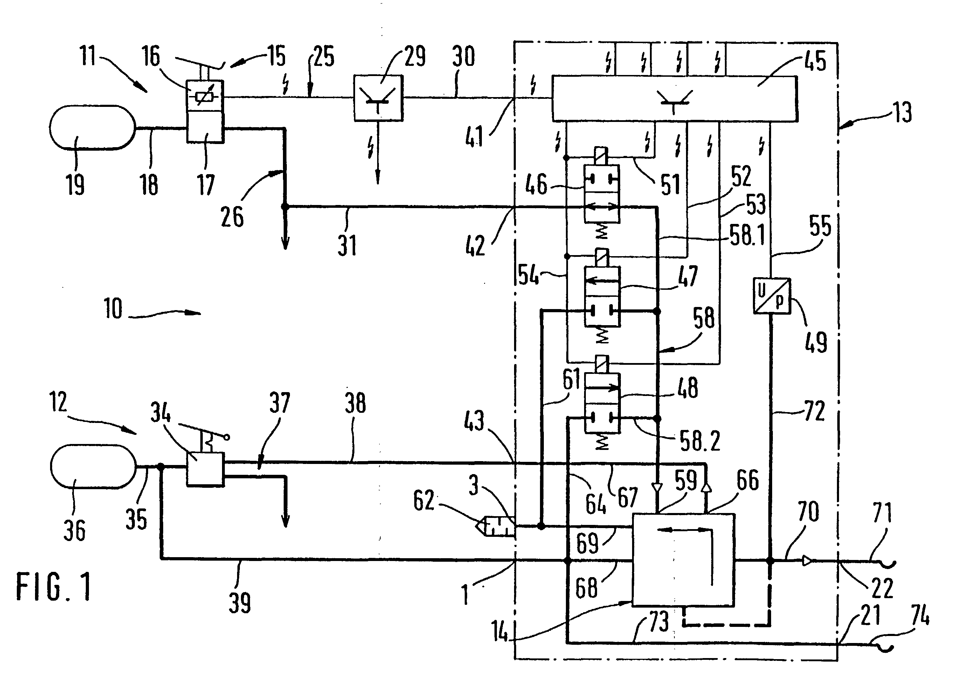

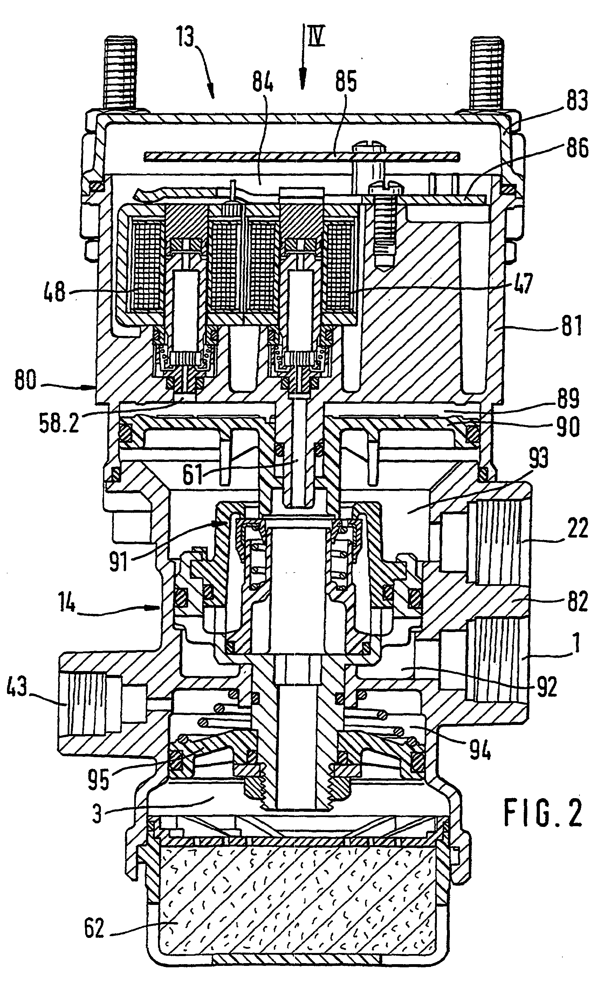

Ein Ausführungsbeispiel der Erfindung ist in der Zeichnung vereinfacht dargestellt und in der nachfolgenden Beschreibung näher erläutert. Es zeigen Figur 1 ein Schaltschema eines Anhängersteuermoduls mit'einem elektrisch und pneumatisch ansteuerbaren Anhängersteuerventil, Figur 2 einen Schnitt durch die Baueinheit entlang dem Linienzug II-II in Figur 4, Figur 3 einen Schnitt durch den oberen Teil der Baueinheit entlang dem Linienzug III-III in Figur 4 und Figur 4 eine Draufsicht auf die geöffnete Baueinheit in Richtung des Pfeiles IV in Figur 2 gesehen.

### Beschreibung des Ausführungsbeispiels

Eine in Figur 1 nur teilweise schematisch wiedergegebene Zweikreis-Zweileitungs-Fremdkraft-Druckluftbremsanlage 10 weist eine Betriebsbremsanlage 11, eine Feststellbremsanlage 12 sowie ein Anhängersteuermodul (nachfolgend Modul bezeichnet) 13 mit einem Anhängersteuerventil 14 auf. Die Druckluftbremsanlage 10 befindet sich auf einem Zugfahrzeug; sie ist für Anhängerbetrieb vorgesehen.

Die Betriebsbremsanlage 11 hat einen fußbetätigbaren Bremswertgeber 15 mit einem elektrischen Teil 16 sowie einem pneumatischen Teil 17. Der Teil 17 des Bremswertgebers 15 steht über eine Vorratsleitung 18 mit einem Druckluftvorrat 19 in Verbindung.

Der Bremswertgeber 15 ist mit seinem elektrischen Teil 16 an einen elektrischen Steuerkreis 25 und mit seinem pneumatischen Teil 17 an einen pneumatischen Steuerkreis 26 der Betriebsbremsanlage 11 angeschlossen. Der elektrische Steuerkreis 25 kann für die Steuerung eines der Hinterachse des Zugfahrzeugs zugeordneten, nicht dargestellten Bremskreises dienen, während der pneumatische Steuerkreis 16 für die Steuerung eines gleichfalls nicht gezeichneten Bremskreises der Vorderachse des Zugfahrzeugs vorgesehen sein kann.

Der elektrische Steuerkreis 25 der Betriebsbremsanlage 11 weist ein elektronisches Steuergerät 29 auf, welches über eine elektrische Steuerleitung 30 an einen elektrischen Steueranschluß 41 des Moduls 13 angeschlossen ist. Der pneumatische Steuerkreis 26 der Betriebsbremsanlage 11 hat eine pneumatische Steuerleitung 31, welche zu einem pneumatischen Steueranschluß 42 des Moduls 13 führt. Durch Betätigung des Bremswertgebers 15 sind Bremsdruckanforderungssignale zu den Steueranschlüssen 41 und 42 des Moduls 13 übertragbar.

Die Feststellbremsanlage 12 besitzt ein handbetätigbares Feststellbremsventil 34, welches mit einer Vorratsleitung 35 an einen Druckluftvorrat 36 angeschlossen ist. Das Feststellbremsventil 34 dient der Ansteuerung eines pneumatischen Steuerkreises 37, mit dem der Hinterachse des Zugfahrzeugs zugeordnete Feststellbremsen betätigbar sind. Der pneumatische Steuerkreis 37 weist ferner eine vom Feststellbremsventil 34 zu einem Steueranschluß 43 des Moduls 13 führende pneumatische Steuerleitung 38 auf. Schließlich ist eine Zweigleitung 39 der Vorratsleitung 35 vom Druckluftvorrat 36 zu einem Vorratsluftanschluß 1 des Moduls 13 geführt.

Wie eingangs erwähnt beinhaltet das Modul 13 ein Anhängersteuerventil 14. Ferner sind in dem Modul 13 eine Steuerelektronik 45, ein Rückhaltventil 46, ein Auslaßventil 47, ein Einlaßventil 48 sowie ein Drucksensor 49 angeordnet. Die drei Ventile 46, 47 und 48 sind als elektromagnetisch betätigbare 2/2 Wegeventile mit Federrückstellung ausgebildet.

Die Steuerelektronik 45 ist ebenso wie der elektrische Teil 16 des Bremswertgebers 15 und das elektronische Steuergerät 29 des elektrischen Steuerkreises 25 auf nicht dargestellte Weise an eine elektrische Energieversorgung des Zugfahrzeugs angeschlossen. Die Steuerelektronik 45 steht mit dem elektrischen Steueranschluß 41 des Moduls 13 in Verbindung. An die Steuerelektronik 45 sind die Ventile 46, 47 und 48 jeweils mit einer Signalleitung 51, 52 und 53 sowie mit einer gemeinsamen Leitung 54 angeschlossen. Der Drucksensor 49 steht mit der Steuerelektronik 45 über eine Leitung 55 in Verbindung. Die Steuerelektronik 45 hat weitere, nicht näher bezeichnete Eingänge, beispielsweise für last-, bremsschlupf-, koppelkraft- und verschleißabhängige Steuersignale.

Das Rückhaltventil 46 des Moduls 13 steht einerseits mit dem pneumatischen Steueranschluß 42 in Verbindung; andererseits geht vom Rückhaltventil 46 eine pneumatische Steuerleitung 58 zu einem Steuereingang 59 des Anhängersteuerventils 14 aus. Das somit an den pneumatischen Steuerkreis 26 der Betriebsbremsanlage 11 angeschlossene Rückhaltventil 46 nimmt stromlos seine Durchlaßstellung ein und ist elektromagnetbetätigt in seine Sperrstellung schaltbar.

Das Auslaßventil 47 ist zuströmseitig gleichfalls an die pneumatische Steuerleitung 58 angeschlossen. Auslaßseitig steht es über eine Leitung 61 mit einer Druckentlastungsstelle 3 des Moduls 13 in Verbindung. Die Druckentlastungsstelle 3 ist mit einem Geräuschdämpfer 62 versehen. Das Auslaßventil 47 nimmt federbetätigt seine Sperrstellung ein und ist elektromagnetbetätigt in seine Durchlaßstellung schaltbar.

Das Einlaßventil 48 steht zuströmseitig über eine Leitung 64 mit dem Vorratsluftanschluß 1 des Moduls 13 in Verbindung. Auslaßseitig ist es an die pneumatische Steuerleitung 58 angeschlossen. Das Einlaßventil 48 nimmt federbetätigt seine Sperrstellung und elektromagnetbetätigt seine Durchlaßstellung ein.

Das Anhängersteuerventil 14 ist über seinen Steuereingang 59 durch Druckaufbau im Bremssinn schaltbar. Das Anhängersteuerventil 14 hat einen zweiten Steuereingang 66, welcher mit einer pneumatischen Steuerleitung 67 mit dem Steueranschluß 43 des Moduls 13 in Verbindung steht. Das Anhängersteuerventil 14 ist somit durch im pneumatischen Steuerkreis 37 der Feststellbremsanlage 12 erzeugten Druckabbau gleichfalls im Bremssinn umschaltbar. Das Anhängersteuerventil 14 steht über eine Vorratsleitung 68 mit dem Vorratsanschluß 1 des Moduls 13 in Verbindung. Eine Auslaßleitung 69 für Druckluft führt vom Anhängersteuerventil 14 zur Druckentlastungsstelle 3 des Moduls 13. Ausgangsseitig führt vom Anhängersteuerventil 14 eine pneumatische Steuerleitung 70 zu einem Steueranschluß 22 des Moduls 13, an welche eine Bremsleitung 71 angeschlossen ist. An die Steuerleitung 70 ist der Drucksensor 49 mit einer Leitung 72 angeschlossen. Schließlich ist in der Baueinheit 13 eine weitere Leitung 73 vorgesehen, welche mit dem Vorratsluftanschluß 1 verbunden ist und zu einem Anschluß 21 führt, von dem'eine Vorratsleitung 74 ausgeht. Die Bremsleitung 71 und die Vorratsleitung 74 sind mit einer Druckluftbremsanlage eines nicht dargestellten Anhängefahrzeugs verbindbar, dessen nicht gezeichnetes Anhängerbremsventil nachfolgend als Verbraucher der bei einer Bremsung über die Bremsleitung 71 übertragenen Steuerdruckluft bezeichnet ist.

Das Modul 13 hat im Zusammenwirken mit der Betriebsbremsanlage 11 sowie der Feststellbremsanlage 12 bei einer Bremsung folgende Funktionsweise: Bei Betätigen des Bremswertgebers 15 erhält die Steuerelektronik 45 ein elektrisches Bremsdruckanforderungssignal. Mit Auftreten dieses Signales schaltet die Steuerelektronik 45 das Rückhaltventil 46 in die Sperrstellung, so daß ein über den pneumatischen Steuerkreis 26 herangeführtes pneumatisches Bremsdruckanforderungssignal am Steuereingang. 59 des Anhängersteuerventils 14 nicht wirksam werden kann. Das Signal des elektrischen Steuerkreises 25 hat also Vorrang vor dem Signal des pneumatischen Steuerkreises 26. Die Steuerelektronik 45 moduliert das elektrische Bremsdruckanforderungssignal des elektrischen Steuerkreises 25 in folgender Weise: Für Druckaufbau am Steuereingang 59 des Anhängersteuerventils 14 wird das Einlaßventil 48 in seine Durchlaßstellung geschaltet, während das Auslaßventil 47 in seiner Sperrstellung verharrt. Für Druckhalten wird das Einlaßventil 48 in seine Sperrstellung umgeschaltet. Für Druckabbau verharrt das Einlaßventil 48 in seiner Sperrstellung, während das Auslaßventil 47 in die Durchlaßstellung geschaltet wird. Entsprechend dem Signalverlauf und der Signalhöhe am Steuereingang 59 steuert das Anhängersteuerventil 14 einen Steuerdruck in die Bremsleitung 71 ein.

Ist der führende elektrische Steuerkreis 25 gestört, nehmen die Ventile 46, 47 und 48 ihre gezeichnete Stellung ein. Ein vom pneumatischen Teil 17 des Bremswertgebers 15 zum Steueranschluß 42 herangeführtes pneumatisches Bremsdruckanforderungssignal wird über das durchlässige Rückhaltventil 46 über die pneumatische Steuerleitung 58 zum gleichen Steuereingang 59 des Anhängersteuerventils 14 geleitet, dem bei intakter Bremsanlage sonst das von der Steuerelektronik 45 modulierte Bremsdruckanforderungssignal zugeführt wird.

Eine Abbremsung des Anhängefahrzeugs ist ferner durch Druckabbau am Steuereingang 66 erzeugbar, indem mittels des Feststellbremsventils 34 ein Druckabbau im pneumatischen Steuerkreis 37 der Feststellbremsanlage 12 vorgenommen wird.

Das Modul 13 mit dem Anhängersteuerventil 14 unterscheidet sich insofern nicht von demjenigen nach der eingangs erwähnten DE 42 26 697 C1; erfindungswesentlich ist jedoch der gemeinsame Steuereingang 59 des Anhängersteuerventils 14 für ein vom elektrischen Steuerkreis 25 oder vom pneumatischen Steuerkreis 26 der Betriebsbremsanlage 11 erzeugtes pneumatisches Bremsdruckanforderungssignal.

Die konstruktive Ausgestaltung des Moduls 13 ist in den Figuren 2 - 4 wiedergegeben. Das Modul 13 hat ein Gehäuse 80, bestehend aus einem Oberteil 81 und einem Unterteil 82 (Figur 2). Im Oberteil 81 des Gehäuses 80 befinden sich unter einem Deckel 83 in einer Gehäusekammer 84 eine Platine 85 der Steuerelektronik 45, das Rückhaltventil 46, das Auslaßventil 47, das Einlaßventil 48 und der Drucksensor 49. Die Ventile 46 - 48 sowie der Drucksensor 49 sind mit einer gemeinsamen Halteplatte 86 am Oberteil 81 befestigt.

Das Gehäuseoberteil 81 weist gegen das Unterteil 82 eine Steuerkammer 89 mit einem Steuerkolben 90 auf. Dieser ist zur Betätigung eines im Unterteil 82 angeordneten Doppelsitzventils 91 vorgesehen. Dieses ist ein kombiniertes Einlaß- und Auslaßventil, mit dem die Verbindung zwischen einer Vorratskammer 92 und einer Bremskammer 93 oder zwischen der Bremskammer 93 und der Druckentlastungsstelle 3 der Baueinheit 13 steuerbar ist. Die Vorratskammer 92 steht mit dem Vorratsluftanschluß 1, die Bremskammer 93 mit dem Bremsleitungsanschluß 22 in Verbindung. Ferner weist das Modul 13 eine mit dem der Feststellbremsanlage 12 zugeordneten Steueranschluß 43 in Verbindung stehende Steuerkammer 94 mit einem Steuerkolben 95 auf. Das in dem Modul 13 befindliche Anhängersteuerventil 14 unterscheidet sich von der herkömmlichen Bauform lediglich dadurch, daß es einen dem elektrischen Steuerkreis 25 und dem pneumatischen Steuerkreis 26 der Betriebsbremsanlage 11 gemeinsam zugeordneten Steuerkolben 90 mit Steuerkammer 89 hat.

Aus Figur 3 ist ersichtlich, daß das an den pneumatischen Steuerkreis 26 angeschlossene Rückhaltventil 46 zuströmseitig mit dem Steueranschluß 42 in Verbindung steht und abströmseitig über eine Leitung 58.1 an die Steuerkammer 89 angeschlossen ist. Stromlos nimmt das Rückhaltventil 46 seine Durchlaßstellung ein. Bestromt unterbricht es die Verbindung zwischen dem Steueranschluß 42 und der Steuerkammer 89.

Aus Figur 2 ist erkennbar, daß das Einlaßventil 48, welches auf nicht dargestellte Weise mit dem Vorratsluftanschluß 1 in Verbindung steht, eine Leitung 58.2 in die Steuerkammer 89 überwacht. Wie gezeichnet sperrt das Einlaßventil 48 stromlos die Verbindung zur Steuerkammer 89 ab.

Das Auslaßventil 47 steht auf nicht dargestellte Weise mit der Steuerkammer 89 in Verbindung und überwacht die zur Druckentlastungsstelle 3 führende Leitung 61 (Figur 2). Stromlos sperrt es die Verbindung zwischen der Steuerkammer 89 und der Druckentlastungsstelle 3.

Der Drucksensor 49 ist auf in den Figuren 2 - 4 nicht dargestellte Weise mit der Bremskammer 93 verbunden. Er erfaßt somit den vom Anhängersteuerventil 14 ausgesteuerten, am Bremsleitungsanschluß 22 herrschenden Druck.

## Patentansprüche

1. Anhängersteuermodul (13) mit einem Anhängersteuerventil (14) für eine Druckluftbremsanlage (10) für Kraftfahrzeuge, welches durch einen elektrischen Steuerkreis (25) und einen pneumatischen Steuerkreis (26) einer Betriebsbremsanlage (11) sowie durch einen pneumatischen Steuerkreis (37) einer Feststellbremsanlage (12) ansteuerbar ist, wobei der aus einem Druckluftvorrat (19) versorgte pneumatische Steuerkreis (26) der Betriebsbremsanlage (11) an die Stelle des führenden elektrischen Steuerkreises (25) treten kann, und welches Steuerkolben zum Betätigen eines Doppelsitzventils (91) aufweist, mit dem die Verbindung zwischen einem Druckluftvorrat (36), einem ' Druckluftverbraucher und einer Druckentlastungsstelle (3) steuerbar ist,
**gekennzeichnet durch** die Merkmale:
- im Anhängersteuerventil (14) ist ein dem elektrischen Steuerkreis (25) und dem pneumatischen Steuerkreis (26) der Betriebsbremsanlage (11) gemeinsam zugeordneter Steuerkolben (90) vorgesehen,
- es ist ein an den pneumatischen Steuerkreis (26) der Betriebsbremsanlage (11) angeschlossenes Ventil (46) vorgesehen, welches bei wirksamem elektrischen Steuerkreis (25) den pneumatischen Steuerkreis (26) der Betriebsbremsanlage (11) gegen das Anhängersteuerventil (14) absperrt und bei ausgefallenem elektrischen Steuerkreis (25) den pneumatischen Steuerkreis (26) der Betriebsbremsanlage freigibt,
- der elektrische Steuerkreis (25) der Betriebsbremsanlage (11) ist seitens des Anhängersteuerventils (14) an ein Einlaßventil (48) und ein Auslaßventil (47) angeschlossen, welche beide als elektromagnetbetätigte 2/2-Wegeventile mit stromloser Sperrstellung ausgebildet sind, wobei das Einlaßventil (48) zuströmseitig mit dem Druckluftvorrat (36) der Feststellbremsanlage (12) und abströmseitig mit einer dem gemeinsamen Steuerkolben (90) des Anhängersteuerventils (14) zugeordneten Steuerkammer (89) verbunden ist, während das Auslaßventil (47) zuströmseitig an diese Steuerkammer (89) und abstromseitig an die Druckentlastungsstelle (3) angeschlossen ist.

2. Anhängersteüermodul nach Anspruch 1; **dadurch gekennzeichnet, daß** das an den pneumatischen Steuerkreis (26) der Betriebsbremsanlage (11) angeschlossene Ventil (46) ein von dem elektrischen Steuerkreis (25) schaltbares, elektromagnetbetätigtes 2/2-Wegeventil ist, welches stromlos seine Durchlaßstellung einnimmt.

3. Anhängersteuermodul nach Anspruch 1, **dadurch gekennzeichnet, daß** das an den pneumatischen Steuerkreis (26) der Betriebsbremsanlage (11) angeschlossene Ventil (46) sowie das Einlaßventil (48) und das Auslaßventil (47) des elektrischen Steuerkreises (25) in einer Kammer (84) eines das Anhängersteuerventil (14) aufnehmenden Gehäuses (80) angeordnet sind, in der sich ferner ein Drucksensor (49) zum Erfassen des vom Anhängersteuerventil (14) ausgesteuerten Verbraucherdrucks sowie eine mit den elektromagnetbetätigten Ventilen (46, 47, 48) und dem Drucksensor (49) verbundenen Steuerelektronik (45) befinden, welche bei Zuleiten eines elektrischen Bremsdruckanforderungssignals die elektromagnetbetätigten Ventile (47, 48) des elektrischen Steuerkreises (25) steuert.

## Claims

1. Trailer control module (13) having a trailer control valve (14) for a compressed-air brake system (10) for motor vehicles, which can be controlled by an electrical control circuit (25) and a pneumatic control circuit (26) of a service brake system (11) and by a pneumatic control circuit (37) of a parking brake system (12), wherein the pneumatic control circuit (26) of the service brake system (11) supplied from a compressed air supply (19) can stand in for the guiding electrical control circuit (25), and which has control pistons for actuating a double-seat valve (91) with which the connection between a compressed air supply (36), a compressed air consumer and a pressure release point (3) can be controlled, **characterised by** the features:
- in the trailer control valve (14) there is provided a control piston (90) associated commonly with the electrical control circuit (25) and the pneumatic control circuit (26) of the service brake system (11),
- a valve (46) connected to the pneumatic control circuit (26) of the service brake installation (11) is provided, which shuts off the pneumatic control circuit (26) of the service brake installation (11) with respect to the trailer control valve (14) when the electrical control circuit (25) is operative, and releases the pneumatic control circuit (26) of the service brake system when the electrical control circuit [25] is inoperative,
- the electrical control circuit (25) of the service brake system (11) is connected on the trailer control valve side to an inlet valve (48) and an outlet valve (47), both these valves being constructed as electro-magnetically actuated 2/2 way valves blocking in the no-current state, wherein the inlet valve (48) is connected on the inflow side to the compressed air supply (36) of the parking brake system (12), and on the outflow side to a control chamber (89) associated with the common control piston (90) of the trailer control valve (14), whilst the outlet valve (47) is connected on the inflow side to this control chamber (89) and on the outflow side to the pressure release point (3).

2. Trailer control module according to claim 1, **characterised in that** the valve (46) connected to the pneumatic control circuit (26) of the service brake system (11) is an electro-magnetically actuated 2/2 way valve which can be switched by the electrical control circuit (25), and which is open in the no-current state.

3. Trailer control module according to claim 1, **characterised in that** the valve (46) connected to the pneumatic control circuit (26) of the service brake system (11), and the inlet valve (48) and the outlet valve (47) of the electrical control circuit (25) are arranged in a chamber (84) of a housing (80) which contains the trailer control valve (14), and in which there are also located a pressure sensor (49) for detecting the consumer pressure set by the trailer control valve (14), and an electronic control (45) connected to the electro-magnetically actuated valves (46, 47, 48) and the pressure sensor (49), which controls the electro-magnetically actuated valves (47, 48) of the electrical control circuit (25) when an electrical brake pressure requirement signal is supplied.

## Revendications

1. Module (13) de commande de remorque, comprenant une valve (14) de commande de remorque pour un système (10) de freinage à air comprimé de véhicule automobile, module qui peut être commandé par un circuit (25) électrique de commande et par un circuit (16) pneumatique de commande d'un système (11) de freinage de service, ainsi que par un circuit (37) pneumatique de commande d'un système (12) de freinage de stationnement, le circuit (26) pneumatique de commande du système (11) de freinage de service, circuit qui est alimenté à partir d'un réservoir (19) d'air comprimé, pouvant remplacer le circuit (25) électrique de commande directeur, et le module comportant des pistons de commande destinés à actionner une valve (91) à siège double par laquelle la communication entre un réservoir (36) d'air comprimé, un appareil consommateur d'air comprimé et un point (3) de déchargement de la pression peut être commandée
**caractérisé par** les caractéristiques :
- il est prévu dans la valve (14) de commande de remorque un piston (90) de commande associé en commun au circuit (25) électrique de commande et au circuit (26) pneumatique de commande du système (11) de freinage de service,
- il est prévu une valve (46) raccordée au circuit (26) pneumatique de commande du système (11) de freinage de service, valve qui, lorsque le circuit (25) électrique de commande est en action, isole de la valve (14) de commande de remorque le circuit (26) pneumatique de commande du système (11) de freinage de service et, lorsque le circuit (25) électrique de commande est défaillant, libère le circuit (26) pneumatique de commande de l'installation de freinage de service,
- le circuit (25) électrique de commande du système (11) de freinage de service est raccordé du côté de la valve (14) de commande de remorque à une valve (48) d'entrée et à une valve (47) de sortie, toutes deux ayant la forme de valves à 2/2 voies actionnées par un électroaimant et à position d'arrêt lorsqu'il ne passe de courant électrique, la valve (48) d'entrée communiquant du côté en amont avec le réservoir (36) d'air comprimé du système (12) de freinage de stationnement et du côté en aval avec une chambre (89) de commande associée au piston (90) commun de commande de la valve (14) de commande de remorque, tandis que la valve (47) de sortie est raccordée du côté en amont à cette chambre (89) de commande et du côté en aval au point (3) de décharge de la pression.

2. Module de remorque suivant la revendication 1, **caractérisé en ce que** la valve (46) raccordée au circuit (26) pneumatique de commande du système (11) de freinage de service est une valve à 2/2 voies actionnée par un électroaimant, qui peut être commutée par le circuit (25) électrique de commande et qui prend sa position de passage lorsqu'il n'y a pas de courant électrique.

3. Module de remorque suivant la revendication 1, **caractérisé en ce que** la valve (46) raccordée au circuit (26) pneumatique de commande du système (11) de freinage de service, ainsi que la valve (48) d'entrée et la valve (47) de sortie du circuit (25) électrique de commande sont disposées dans une chambre (84) d'un boîtier (80) qui reçoit la valve (14) de commande de remorque et dans lequel se trouve en outre un capteur (49) de pression destiné à relever la pression de l'appareil utilisateur commandé par la valve (14) de commande de remorque ainsi qu'une électronique (45) de commande reliée aux valves (46, 47, 48) actionnées par un électroaimant et aux capteurs (49) de pression, électronique qui, lors de l'arrivée d'un signal électrique demandant une pression de freinage, commande les valves (47, 48) actionnées par un électroaimant du circuit (25) électrique de commande.
